# EUROPEAN PATENT APPLICATION

(11) **EP 4 668 014 A1**
(43) Date of publication of application: **24.12.2025**
(21) Application number: 25182759.8
(22) Date of filing: 13.06.2025
(51) Int. Cl.: G03B 17/56, F16M 11/14, F16M 13/04, A45F 5/02

(54) **CAMERA HOLDER**

(30) Priority: 20.06.2024 IT 202400014245
(71) Applicant: Intellitronika Srl, 00144 Roma (IT)
(72) Inventor: Veggi, Maurizio Flavio, Riolo Terme (IT); Cembali, Riccardo, Castel San Pietro Terme (IT)
(74) Representative: Minghetti, Mauro

(57) **Abstract**

A camera holder (1), comprising a first member (2), configured to be removably attached to a garment (4), and a second member (3), configured to be removably attached to a camera. The second member (3) comprises connecting means (9), removable and orientable, to the first member (2); furthermore, the connecting means (9) can be controlled, by the user, via operating controls (10), to pass from an unlocking configuration, in which the second member (3) can be freely uncoupled from the first member (2), to a locking configuration, in which the second member (3) is coupled to the first member (2), according to a pre-set and modifiable orientation.

## Description

### TECHNICAL FIELD OF THE INVENTION

The present invention relates to a camera holder.

More specifically, the present invention relates to a camera holder wearable by law enforcement, surveillance personnel, and the like.

### BACKGROUND ART

Currently, it is known that law enforcement officers, or surveillance officers, or, more generally, any other person authorized to do so, can wear a camera installed on their clothing, for reasons of security, public order, to carry out investigations, etc.

This camera is worn by the authorized person with the aim of filming the environment surrounding the person (usually the environment in front of the person) while he carries out his public order, surveillance, or other service.

In this way, the subject can - if necessary, and if provided by law - easily and immediately acquire evidence of crimes, or other situations to be documented, without having to hold the camera, or other mobile device equipped with a camera (for example smartphone, tablet, etc.).

Typically, in these situations, the camera is attached to the garment (often a jacket, vest, or similar) using a specially designed clip.

This clip is normally attached to a specific part of the front or upper surface of the garment, which, in some cases, may also be the flap of a pocket, or similar.

Using a clip to attach the camera to the garment is not entirely satisfactory from more than one point of view.

First of all, the clip fastening can obviously be affected by the condition of the garment worn by the subject.

In fact, if the garment is not in good condition, that is, in other words, it is excessively worn or frayed, the fastening may not be optimal, in the sense that the clip may accidentally, or inadvertently, come off the garment itself.

In other cases, the garment may have surface or consistency characteristics that do not allow for optimal constraint of the clip, especially if the latter does not have sufficient clamping force.

So, ultimately, a certain clip may be satisfactory for certain types of garments, but not for others.

Secondly - but not least - the clips currently used do not allow for a fully satisfactory camera orientation.

In other words, the limited orientation possibilities of the camera with respect to the clip do not guarantee that the camera itself actually captures the surrounding areas of interest at a given moment.

It should also be added that the cameras normally used in this type of application are not, at present, of the miniaturized type, and therefore can also have a certain weight.

Often, this weight cannot be supported optimally (and therefore, also, with the right orientation) by a clip that is too small.

It would therefore be necessary to use clips that are too large in size, and which would, therefore, be very uncomfortable and comfortless to wear.

### OBJECTS OF THE INVENTION

The technical aim of the present invention is therefore to improve the state of the art in the field of camera holders, in particular those worn by law enforcement, surveillance officers, or other authorized person.

Within such technical aim, it is an object of the present invention to create a camera holder capable of overcoming the previously mentioned drawbacks.

Another object of the present invention is to provide a camera holder that can be attached, in a more secure and reliable manner, to the clothing worn by the law enforcement officer, or by the security officer, or other authorized person. Another object of the present invention is to create a camera holder that allows the camera to be oriented precisely and reliably with respect to the clothing worn by the authorized subject.

Another object of the present invention is to provide a camera holder that allows the previously stated objects to be achieved with a constructionally simple and economical solution.

This aim and these objects are achieved by the camera holder according to the attached claim 1.

The holder includes a first member configured to be removably attached to a garment, and a second member configured to be removably attached to a camera. The second member includes removable and orientable connecting means to the first member.

Furthermore, the aforementioned connecting means can be controlled by the user, via actuation commands, to switch from an unlocking configuration, in which the second member can be freely uncoupled from the first member, to a locking configuration, in which the second member is coupled to the first member, according to a pre-set and modifiable orientation.

In addition, the first member is configured to be removably constrained at an opening, a buttonhole, or the like, of the garment; for this purpose, the first member comprises a head and a counter-head, mutually removably matable, on either side of such opening of the garment.

This solution allows, first of all, to securely attach the first member to the garment, in particular at one of its openings (even if specifically dedicated).

Furthermore, thanks to this secure attachment to the garment, the camera can also be aligned more precisely and reliably with the respective second member. Dependent claims refer to preferred and advantageous embodiments of the invention.

### BRIEF DESCRIPTION OF THE DRAWINGS

The features of the invention will be better understood by any person skilled in the art from the following description and the attached drawings, given as a non-limiting example, in which:
Figure 1 is a front axonometric view of the holder according to the invention;
Figure 2 is a rear axonometric view of the holder;
Figure 3 is a front view of the holder;
Figure 4 is a rear view of the holder;
Figure 5 is a top view of the holder, with the first member and second member separated;
Figure 6 is a top view of the holder, with the first member and the second member coupled;
Figure 7 is a top view of the holder, with the first member exploded;
Figure 8 is a detailed side view of the head of the first member;
Figure 9 is a rear axonometric view of the head of the first member;
Figure 10 is a front axonometric view of the head of the first member;
Figure 11 is a front and sectional axonometric view of the second member of the support, with the connecting means in the locking configuration of the first member;
Figure 12 is a rear and sectioned axonometricf view of the second member of the support, with the connecting means in the locking configuration of the first member;
Figure 13 is a front and detailed axonometric view of the connecting means in the unlocking configuration of the first member;
Figure 14 is a rear, detailed, axonometic view of the connecting means in the unlocking configuration of the first member;
Figure 15 is an exploded axonometric view of the first member and the connecting means of the second member;
Figure 16 is a detailed, sectioned, axonometric view of the second member of the holder;
Figure 17 is a further detailed, sectioned axonometric view of the second member of the holder;
Figure 18 is a sectioned axonometric view, with some parts removed for clarity, of the connection means of the holder, in the first member unlocked configuration.

### DETAILED DESCRIPTION OF THE INVENTION

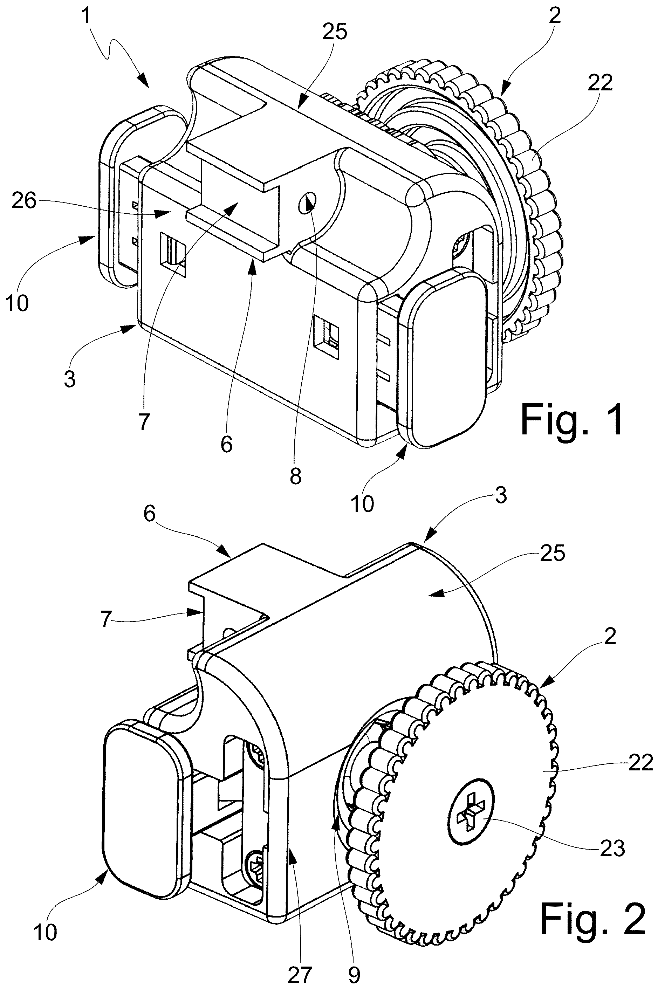

With reference to the attached Figure 1, the numeral 1 generally indicates a camera holder according to the present invention.

Holder 1 comprises a first member 2 and a second member 3.

The first member 2 is configured to be removably attached to a garment 4.

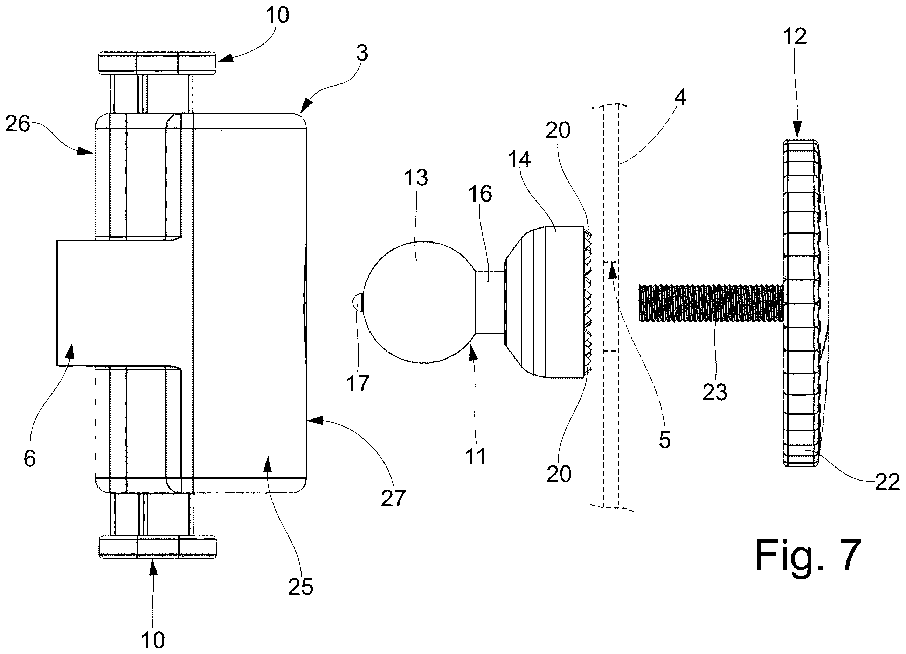

In more detail, the first member 2 is configured to be removably constrained in an opening 5, a buttonhole, or similar, of the garment 4 (Figure 7).

This opening 5, made in the garment 4, can also be specially dedicated.

The second member 3 is configured to be removably attached to a camera (not shown in the figures).

For this purpose, the second member 3 comprises a connecting portion 6 to a camera.

The connecting portion 6 can be shaped in various ways, mainly in relation to the characteristics of the camera that must be connected to the second member 3.

For example, in the specific embodiment illustrated in the attached figures - and in a non-limiting manner - the connecting portion 6 comprises a mating surface 7, provided with a groove, and a through hole 8, for the insertion, for example, of a screw, or similar.

The second member 3 comprises connecting means, indicated overall with 9, removable and orientable, to the first member 2.

In particular, the aforementioned connecting means 9 are configured to achieve the removable and orientable coupling of the second member 3 to the first member 2.

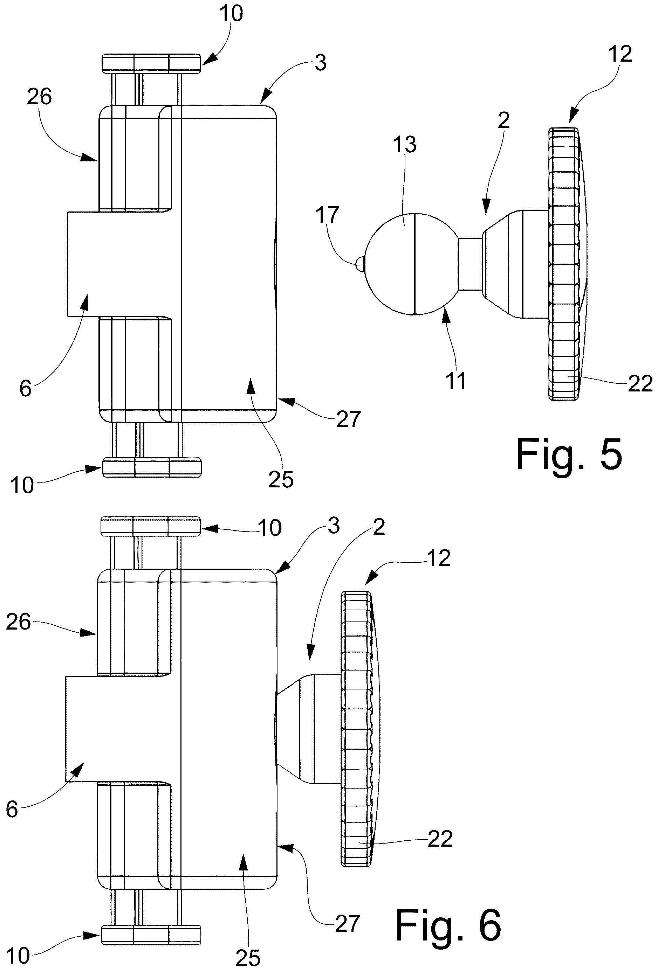

In more detail, the connecting means 9 can be controlled (by the user wearing the garment 4 to which the holder 1 is attached) to switch from an unlocking configuration, in which the second member 3 can be freely disconnected from the first member 2 (Figure 5), to a locking configuration, in which the second member 3 is coupled to the first member 2, according to a pre-set and modifiable orientation (Figure 6).

For this purpose, the aforementioned connecting means 9 comprise operating controls 10, better described below.

Consequently, the user, by acting on the aforementioned operating controls 10, can, at his own discretion, connect or disconnect the second member 3 (to which the camera is connected) to, or from, the first member 2 (fixed to the garment 4).

Therefore, when the user does not need to use the camera, he can simply uncouple it (together with the second member 3) from the first member 2.

Therefore, only the first member 2 remains connected to the garment 4, which, for this reason, is of simple construction, light and takes up very little space, as better explained below.

Furthermore, when it is not necessary to use the camera, the first member 2 can also be completely removed from the garment 4 (as better described below).

The first member 2 comprises a head 11 and a counter-head 12, which can be removably coupled together.

The head 11 is configured to mate with the second member 3 of the holder 1.

In more detail, the head 11 is configured to couple to the second member 3 in a removable manner, under the control of the connecting means 9.

More specifically, the head 11 and the counter-head 12 can be removably coupled on either side of the opening 5 of the garment 4.

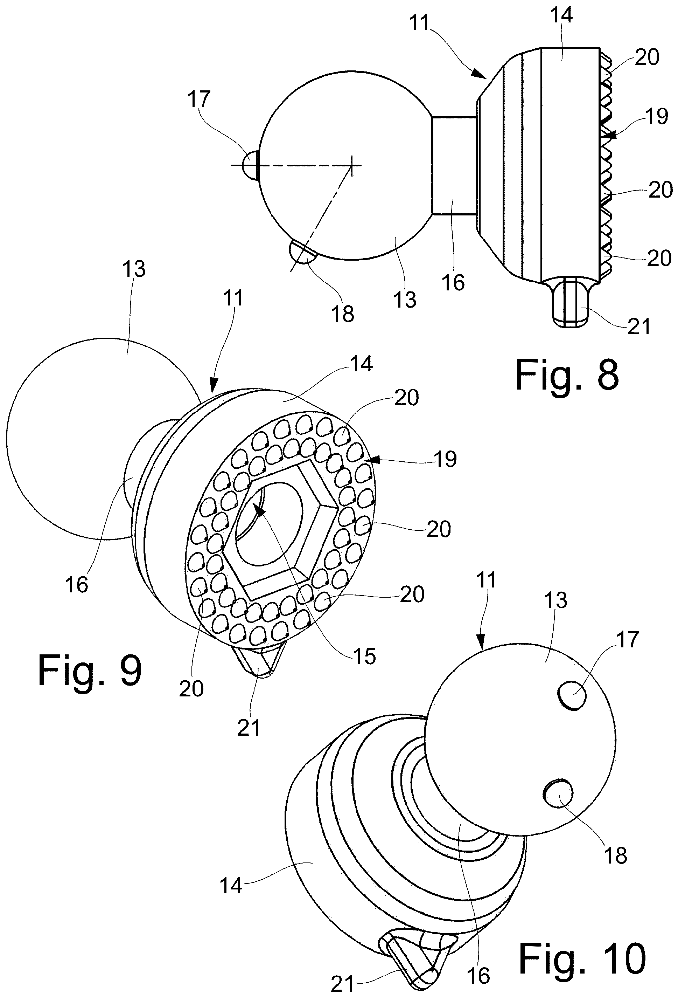

The head 11 (see Figures 8, 9, 10) comprises a shaped portion 13; furthermore, the head 11 comprises a coupling end 14 to the counter-head 12.

The coupling end 14 has a substantially cylindrical shape; the coupling end 14 includes a threaded bushing 15.

The shaped portion 13 has a spherical, or substantially spherical, shape.

The shaped portion 13 and the coupling end 14 are connected by a neck 16 (cylindrical or substantially cylindrical).

The neck 16 is connected to the coupling end 14 by means of a truncated conical connection portion.

The shaped portion 13 comprises a first protuberance 17 and a second protuberance 18.

The first protuberance 17 is provided on the external surface of the shaped portion 13, and in particular at the apex of the same; in other words, the first protuberance 17 is positioned, substantially, at the trace of the axis of (cylindrical) symmetry of the first member 2 on the external surface of the shaped portion 13 itself.

The second protuberance 18 is, instead, always provided on the external surface of the shaped portion 13, at a certain angular distance from the first protuberance 17 (for example, at a distance of 60° from the first protuberance 17).

The coupling end 14 includes an end surface 19 which, in use, is intended to contact the surface of the garment 4.

The end surface 19 is constituted, in practice, by a circular crown that surrounds the opening of the threaded bushing 15.

Furthermore, the end surface 19 comprises a plurality, or distribution, of reliefs 20. The reliefs 20 have the purpose of increasing friction with the surface of the garment 4 (in the area surrounding the opening 5).

The reliefs 20 are conical, or substantially conical, or, more generally, pointed in shape, or substantially pointed.

The reliefs 20 are preferably distributed uniformly, or substantially uniformly, on the end surface 19.

The coupling end 14 includes an indicator 21 for the correct positioning, and constraint, of the first member 2 to the garment 4.

In particular, the indicator 21 allows the first member 2 to be constrained to the garment 4 in the correct position and then, in turn, the second member 3, which supports the camera, to be correctly oriented with respect to the first member 2. The indicator 21 comprises, for example, a notch (preferably a triangular notch, or in any case a substantially pointed, or arrow-shaped, notch) which identifies a specific direction, along which the indicator 21 itself must be positioned to obtain the correct assembly of the holder 1.

For example, for correct assembly of holder 1, indicator 21 must be facing downwards (or upwards), for reasons that will become clearer later.

The counter-head 12 comprises a knob 22, which in turn is associated with a screw 23.

The knob 22 has a discoid, or substantially discoid, shape; it comprises a central hole 24, in which the aforementioned screw 23 engages.

The knob 22 is preferably made with a large surface to ensure extended contact with the garment 4, and therefore a more stable constraint of the first member 2.

In use, screw 23 is inserted into opening 5 of garment 4, and is then engaged and screwed into threaded bushing 15 of head 11.

Once screwing is complete, the garment 4 remains tightened and locked between the head 11 and the counter-head 12; the presence of the pointed reliefs 20 prevents accidental and unwanted rotations, considering the fact that the indicator 21 of the coupling end 14 must remain in the pre-set position (for example, downwards).

The second member 3 comprises a main body 25.

The main body 25 comprises a front side 26 and a rear side 27.

The distinction between front side 26 and rear side 27 refers, in particular, to the configuration of use of the holder 1.

The front side 26 is the one, in use, facing the surrounding environment.

The front side 26, therefore, comprises the connecting portion 6 to the camera.

The rear side 27 of the main body 25 comprises a seat 28 for the insertion of the head 11, in particular its shaped portion 13.

As previously mentioned, the connecting means 9 are configured to lock the shaped portion 13 of the head 11 inside the seat 28 (locking configuration), or, selectively, to unlock the shaped portion 13 itself, allowing it to be freely extracted from the aforementioned seat 28 (unlocking configuration).

In more detail, the connecting means 9 are configured to selectively create a partial occlusion at the opening of the seat 28.

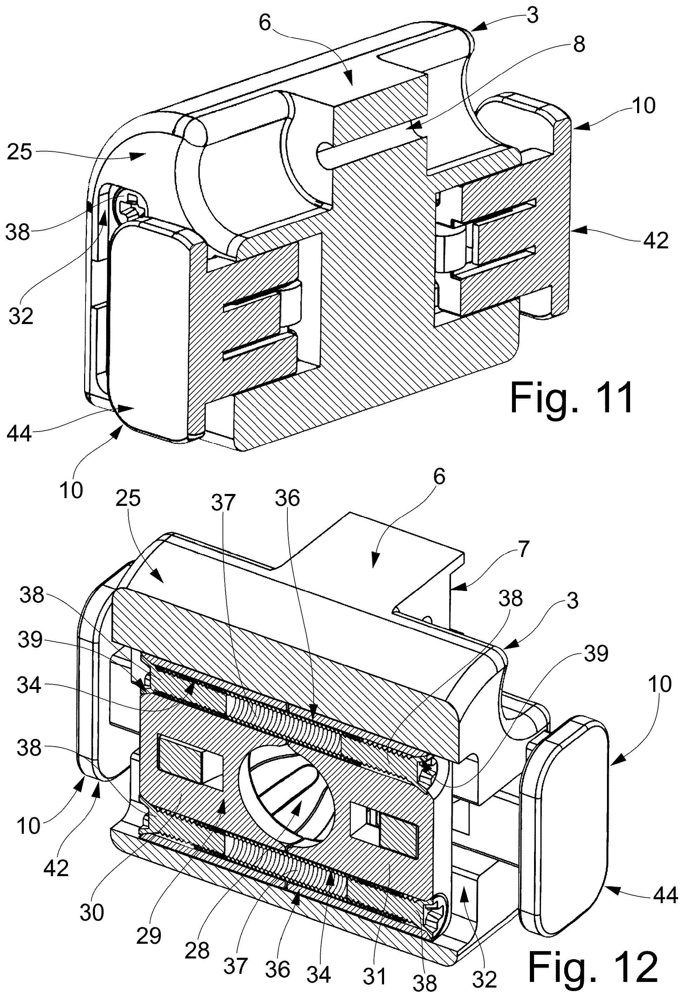

In other words, the connecting means 9 comprise partial occlusion members 29 of the opening of the seat 28 (Figure 12).

The partial occlusion members 29 are configured to reduce the width of the opening of the seat 28, in particular when the shaped portion 13 is engaged inside the seat 28 itself.

The partial occlusion members 29 allow the width of the opening of the seat 28 to be reduced so that it is less than the maximum size of the shaped portion 13, thus creating an impediment to the exit of the shaped portion 13 itself from the seat 28 (i.e., in essence, an undercut).

With reference, for example, to figures 10-13, the partial occlusion members 29 comprise a first shutter element 30 and a second shutter element 31.

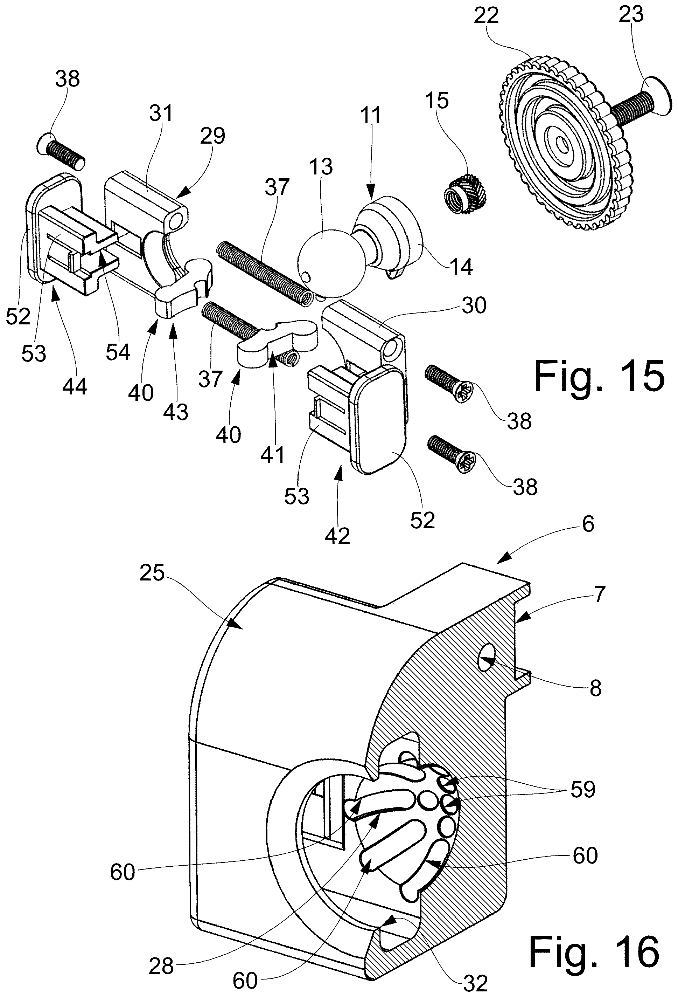

The first shutter element 30 and the second shutter element 31 slide inside a housing 32 of the main body 25 (Figure 15).

The housing 32, in fact, is made by passing through the main body 25 (from side to side), and communicates with the seat 28.

In other words, the housing 32 intercepts the seat 28, so that the first shutter element 30 and the second shutter element 31 can selectively enter the seat 28 from opposite sides, thus reducing the width of the opening of the seat 28 itself.

The first shutter element 30 and the second shutter element 31 are identical to each other, and are arranged in a mirror-like fashion with respect to the center of the seat 28.

As can be observed, for example, in Figure 12, the first shutter element 30 and, equally, the second shutter element 31, are substantially shaped like a parallelepiped, and include a recess 33 of substantially semicircular shape.

The recess 33 is made at one of the sides of the first, or second, shutter element 30, 31.

Furthermore, the first or second shutter element 30, 31 comprises two through channels 34, parallel to each other.

The two through channels 34 are arranged on the sides of the recess 33, or, in other words, the recess 33 is interposed between the two through channels 34.

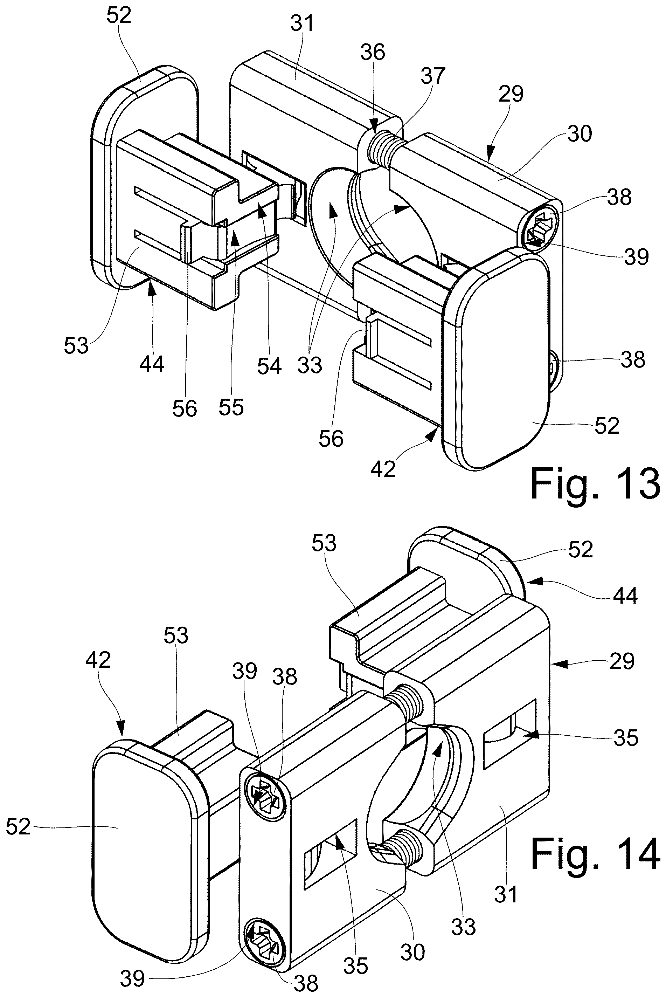

In addition, the first, or second, shutter element 30, 31 includes a central window 35 (Figure 14).

The central window 35 is, also, interposed between the two through channels 34. Referring, now, to Figure 10, the partial occlusion members 29 comprise elastic members 36.

The elastic members 36 are configured to maintain the first and second shutter elements 30, 31 in the locking configuration shown in Figure 10.

In this locking configuration, the first shutter element 30 and the second shutter element 31 are in mutual contact, or placed side by side, so that the respective recesses 33, when joined, form a substantially circular opening.

The elastic members 36 comprise two helical cylindrical springs 37.

The two helical cylindrical springs 37 are inserted into the four through channels 34 of the first, second shutter element 30, 31 (which are, in pairs, coaxial). Furthermore, the elastic members 36 comprise four screws 38, inserted, on opposite sides, into the four through channels 34 of the first, second shutter element 30, 31. The four screws 38 are, two by two, inserted into the ends of the two helical cylindrical springs 37.

The heads of the screws 38 meet on their respective flared ends 39 of the through channels 34.

The helical cylindrical springs 37 are, therefore, trapped, and constrained, inside the through channels 34.

The elastic action exerted by the helical cylindrical springs 37, therefore, tends to keep the aforementioned first shutter element 30 and second shutter element 31 stably in the locking configuration (i.e. closed together).

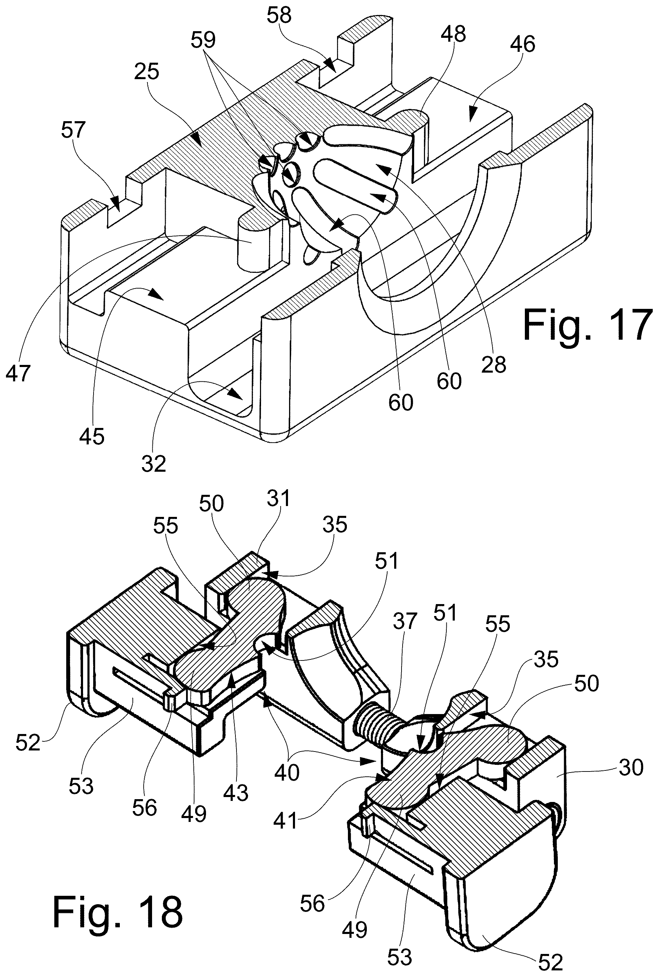

The operating controls 10 of the connecting means 9 comprise a lever mechanism, indicated overall with 40 (Figures 15, 18).

The lever mechanism 40 is configured to selectively determine the translation of the first shutter element 30 and the second shutter element 31 from the locking configuration of the head 11 (Figure 10), in which the first shutter element 30 and the second shutter element 31 are brought together, to the unlocking configuration of the head 11, in which the first shutter element 30 and the second shutter element 31 are moved apart, and vice versa.

This reciprocal translational motion of the first shutter element 30 and the second shutter element 31 is counteracted, as mentioned, by the elastic members 36, which tend to maintain the elements 30, 31 in the locking configuration, in which they are in mutual contact.

The lever mechanism 40 comprises, in more detail, a first lever 41 and a first button 42.

Furthermore, the lever mechanism 40 includes a second lever 43 and a second button 44.

The first lever 41 is associated with the first shutter element 30 and the first button 42, while, similarly, the second lever 43 is associated with the second shutter element 31 and the second button 44.

The first button 42 and the first lever 41, as well as the second button 44 and the second lever 43, are respectively housed in a first cavity 45 and in a second cavity 46 of the central body 25 of the second member 3 (Figure 17).

The first cavity 45 and the second cavity 46 are arranged, specularly, on the sides of the seat 28; the first cavity 45 and the second cavity 46 communicate with the housing 32 of the partial occlusion members 29.

In the transition zones, respectively, between the first cavity 45 and the housing 32, and between the second cavity 46 and the housing 32, the central body 25 forms a first pin element 47 and a second pin element 48.

The first pin element 47 and the second pin element 48 have a substantially semicircular cross-section.

The first lever 41 and the second lever 43 are identical to each other (just as the first button 42 and the second button 44 are identical to each other).

The first lever 41 and the second lever 43 each comprise a first end 49 and a second end 50, opposite each other.

The first end 49 and the second end 50 are rounded/jointed.

Furthermore, the first lever 41 and the second lever 43 each comprise a respective compartment 51; this compartment 51 has a substantially semicircular cross-section, complementary to that of the first pin element 47 and the second pin element 48.

The first lever 41 and the second lever 43 are arranged in mirror images with respect to the seat 28.

The first lever 41 and the second lever 43 are, therefore, pivoted to the main body 25 of the second member 3, and in particular, respectively, at the first pivot element 47 and at the second pivot element 48.

In more detail, the first pin element 47 is engaged in compartment 51 of the first lever 41; similarly, the second pin element 48 is engaged in compartment 51 of the second lever 43.

The first button 42 and the second button 44 each comprise an actuation portion 52 and an extension 53, which are integral/solid with each other.

The actuation portion 52 is flat, or substantially flat (e.g. rectangular in shape). The extension 53, in turn, includes a sort of recess 54.

In this recess 54 a contact surface 55 is defined for the first end 49 of the first, second lever 41, 43.

Furthermore, the extension 53 includes a tooth 56.

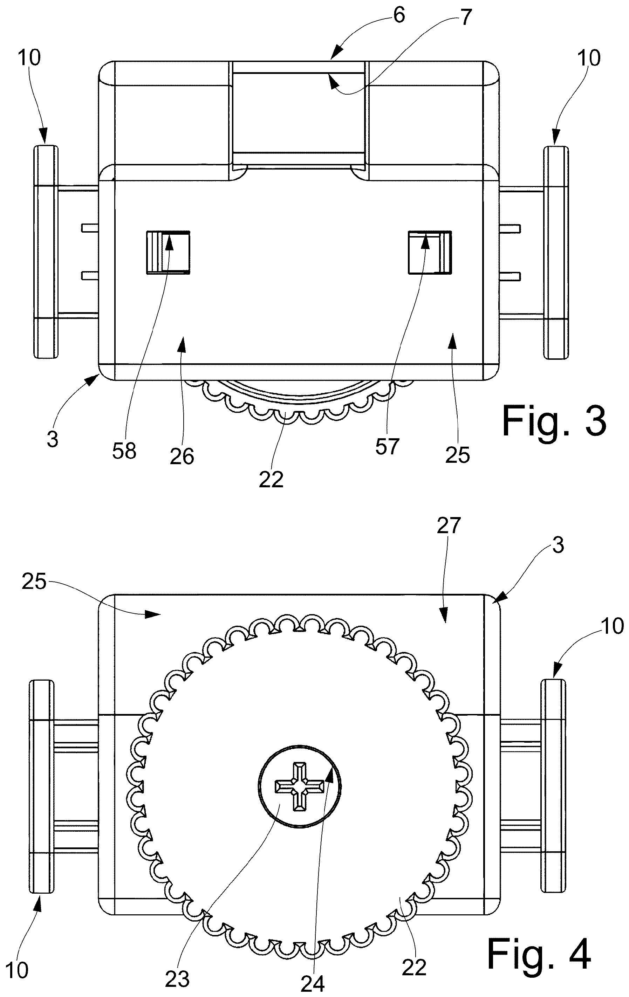

As visible, for example, in Figures 1 and 3, the main body 25 of the second member 3 comprises, on its rear side 27, a first window 57 and a second window 58 (Figures 3, 17), which communicate, respectively, with the first cavity 45 and the second cavity 46.

Tooth 56 of the first button 42 is slidably engaged in the first window 57; likewise, tooth 56 of the second button 44 is slidably engaged in the second window 58. Therefore, the first window 57 and the second window 58 act as limit switches for the translation of the first button 42 and the second button 44, respectively.

The second end 50 of the first lever 41 and that of the second lever 43 engage, instead, in the central windows 35 of the first shutter element 30 and of the second shutter element 31 (in particular, on the outermost sides of the aforementioned central windows 35).

Consequently, in use, the rotations of the first lever 41 (around the first pin element 47) and of the second lever 43 (around the second pin element 48), caused respectively by the translations - towards the inside of the main body 25 - of the first button 42 and of the second button 44, determine the mutual distancing of the first shutter element 30 and of the second shutter element 31, to pass from the locking configuration to the unlocking configuration of the shaped portion 13. With particular reference to Figure 14, the seat 28 comprises, distributed on its internal surface, a plurality of impressions 59 and grooves 60.

The internal surface of the seat 28 is hemispherical, or substantially hemispherical, and therefore has a shape complementary to that of the shaped portion 13.

The impressions 59 are preferably circular in shape; the grooves 60 have rounded/rounded ends.

The grooves 60 all extend along an angular extension of approximately 90° inside the seat 28.

The impressions 59 and the grooves 60 are intended to be engaged, respectively, by the first protuberance 17 and the second protuberance 18 of the shaped portion 13. For example, in the embodiment illustrated in the attached figures, the impressions 59 are five in number (four arranged in a cross, plus one central one).

The grooves 60 are, instead, eight in number, angularly equidistant from each other along the entire hemispherical surface of the seat 28.

The engagement of the two protuberances 17, 18, respectively, in the impressions 59 and in the grooves 60 occurs selectively, in relation to the orientation that the user wishes to give to the second member 3 (which supports the camera) with respect to the first member 2 (connected to the garment 4).

In fact, depending on the inclination assumed by the second member 3 with respect to the first member 2, the first protuberance 17 and the second protuberance 18 engage, respectively, in a different impression 59 and in a different groove 60 of the seat 28.

In practice, therefore, the impressions 59 and the grooves 60 define a plurality (however discrete) of possible orientations that the second member 3 can assume with respect to the first member 2, at the user's discretion.

In practical use, therefore, the user first connects the first member 2 to the garment 4.

In particular, the screw 23 of the counter-head 12 is inserted into the opening 5, and it is then engaged and screwed into the threaded bushing 15 of the head 11, until the end surface 19 rests on the surface of the garment 4 itself.

The presence of the reliefs 20, which can penetrate the fabric, prevents accidental movements.

In particular, at this stage, the user must pay attention to whether the indicator 21 is in the recommended position for correct installation (for example, facing downwards).

The position of indicator 21 therefore constitutes a sort of "0" point for all possible orientations of the second member 3 with respect to the first member 2.

Once the first member 2 has been correctly connected to the garment 4, one then proceeds to couple the second member 3 (to which the camera has been previously fixed) to the first member 2 itself.

In particular, the user acts on the operating controls 10, bringing the connecting means 9 into the unlocking configuration (maximum opening of the seat 28).

In more detail, by acting on the first button 42 and on the second button 44, the first shutter element 30 and the second shutter element 31 are moved away from each other - via the lever mechanism 40 - in order to obtain the maximum opening of the seat 28.

In this configuration, the shaped portion 13 of the head 11 can be freely engaged inside the seat 28.

The shaped portion 13 can be inserted into the seat 28 with any entry inclination and angular position; following the insertion of the shaped portion 13, the first protuberance 17 engages in one of the imprints 59, while the second protuberance 18 engages in one of the grooves 60, which are automatically selected based on the inclination and angular position with which the shaped portion 13 is inserted. While the partial occlusion members 29 (first and second shutter element 30, 31) are in the unlocking configuration (maintained by pressing the buttons 42, 44), it is possible to modify, at the user's discretion, the inclination and orientation of the shaped portion 13 inside the seat 28, depending on the user's specific usage requirements.

When the buttons 42, 44 are released, the first and second shutter elements 30, 31 partially block the opening of the seat 28, and engage, in particular, at the neck 16 of the head 11.

In this configuration, the shaped portion 13 is trapped inside the seat 28, and the first and second protuberances 17, 18 remain engaged respectively in the imprint 59 and in the groove 60, selected on the basis of the chosen inclination and orientation: in this way, the second member 3 remains, with respect to the first member 2, firmly in the orientation chosen by the user, without the possibility of accidental movements.

Evidently, to modify the orientation of the second member 3 (carrying the camera) with respect to the first member 2, or to completely release the second member 3 from the first member 2, the user acts on the buttons 42, 44, so as to move away the first shutter element 30 and the second shutter element 31, so as to be able to freely move/extract the shaped portion 13.

It has thus been seen how the invention achieves the proposed objects.

The holder 1 according to the invention can be fixed, in a more secure and reliable way than known solutions, to the garment worn by the law enforcement officer, or by the security officer, or other authorized person.

Furthermore, the holder 1 according to the invention allows the camera to be oriented precisely and reliably with respect to the garment worn by the authorized subject, without the risk of accidental movements and with a wide margin for modification and customization.

These results are achieved with a constructionally simple, cheap, reliable solution, but at the same time light and comfortable to wear.

The materials used to make the various parts of holder 1 can be chosen from a wide range, in relation to specific needs and based on their characteristics, without limitations.

## Claims

1. Camera holder (1), comprising a first member (2), configured to be removably attached to a garment (4), and a second member (3), configured to be removably attached to a camera, **characterized in that** said second member (3) comprises connecting means (9), removable and orientable, to said first member (2), **and in that** said connecting means (9) can be controlled by the user, via operating controls (10), to switch from an unlocking configuration, in which said second member (3) can be freely disconnected from said first member (2), to a locking configuration, in which said second member (3) is coupled to said first member (2), according to a pre-set and modifiable orientation.

2. Camera holder (1) according to claim 1, wherein said first member (2) is configured to be removably constrained at an opening (5), a buttonhole, or the like, of said garment (4), said first member (2) comprising a head (11) and a counter-head (12) which can be removably coupled with each other, on either side of said opening (5) of said garment (4).

3. Camera holder (1) according to claim 2, wherein said head (11) comprises a shaped portion (13) and a coupling end (14) to said counter-head (12), said shaped portion (13) having a spherical or substantially spherical shape.

4. Camera holder (1) according to claim 3, wherein said shaped portion (13) comprises a first protuberance (17) and a second protuberance (18), said first protuberance (17) being provided on the external surface, and at the apex, of said shaped portion (13), said second protuberance (18) being provided, on the external surface of said shaped portion (13), at a certain angular distance from said first protuberance (17).

5. Camera holder (1) according to claim 3 or 4, wherein said second member (3) comprises a main body (25) comprising a front side (26) and a rear side (27) with reference to the configuration of use of the holder (1), said rear side (27) comprising a seat (28) for the insertion of said shaped portion (13), said connecting means (9) being configured to lock said shaped portion (13) inside said seat (28), or, selectively, to unlock said shaped portion (13), allowing its free extraction from said seat (28).

6. Camera holder (1) according to claim 5, wherein the internal surface of said seat (28) is semi-spherical, or substantially semi-spherical, and further comprises, distributed on its internal surface, a plurality of imprints (59) and grooves (60), intended to be engaged, respectively, by said first protuberance (17) and by said second protuberance (18) of said shaped portion (13).

7. Camera holder (1) according to one of claims 5, 6, wherein said connecting means (9) comprise partial occlusion members (29) of said seat (28), configured to reduce the width of the opening of said seat (28) when said shaped portion (13) is engaged inside said seat (28).

8. Camera holder (1) according to claim 7, wherein said partial occlusion members (29) comprise a first shutter element (30) and a second shutter element (31), sliding inside a housing (32), of said main body (25), communicating with said seat (28), so that said first shutter element (30) and said second shutter element (31) are able to enter, selectively, into said seat (28) from opposite sides, so as to reduce the width of the opening of said seat (28).

9. Camera holder (1) according to claim 8, wherein said partial occlusion members (29) comprise elastic members (36) configured to maintain said first shutter element (30) and said second shutter element (31) in the locking configuration of said head (11).

10. Camera holder (1) according to one of claims 8, 9, wherein said operating controls (10) comprise a lever mechanism (40) configured to selectively cause the translation of said first shutter element (30) and said second shutter element (31) from the locking configuration of said head (11), in which said first shutter element (30) and second shutter element (31) are brought together to limit the width of the opening of said seat (28), to the unlocking configuration of said head (11), in which said first shutter element (30) and second shutter element (31) are moved apart, and vice versa, to allow the entry or exit of said shaped portion (13).
